# EUROPEAN PATENT SPECIFICATION

(11) **EP 1 601 594 B1**
(45) Date of publication and mention of the grant of the patent: **22.11.2006**
(21) Application number: 04718289.4
(22) Date of filing: 08.03.2004
(51) Int. Cl.: B65G 47/14

(54) **MACHINE FOR STRAIGHTENING AND ALIGNING PLASTIC VESSELS**
MASCHINE ZUM GERADERICHTEN UND AUSRICHTEN VON KUNSTSTOFFBEHÄLTERN
MACHINE POUR REDRESSER ET ALIGNER DES RECIPIENTS EN PLASTIQUE

(30) Priority: 12.03.2003 IT PR20030017
(43) Date of publication of application: 07.12.2005
(73) Proprietor: Lanfranchi S.R.L., 43044 Collecchio (Parma) (IT)
(72) Inventor: LANFRANCHI, Lino, I-43044 Collecchio (Parma) (IT)
(74) Representative: Guareschi, Antonella
(86) International application number: PCT/EP2004/002343
(87) International publication number: WO 2004/080859

(56) References cited:
- EP-A- 1 209 103
- US-A- 4 825 995
- US-A- 6 098 781

## Description

The present invention deals with a machine for straightening and aligning plastic vessels.

Different types of machines for straightening and aligning plastic bottles are known and the present invention refers in particular to the type that comprises a cylindrical hopper inside which the bottles are randomly thrown.

The cylindrical hopper is rotated around its own vertical axis and inside it means are provided for taking the bottles from the hopper bottom to its upper edge where they fall into cradles arranged on the external hopper wall along its whole upper edge.

The cradles for a certain length are closed on the bottom by an annular plane wall that is developed with a certain prefixed arc.

In the length where the wall is lacking, the bottles fall from cradles in below-placed unloading channels that straighten the bottles by placing them with their axis vertical and their neck upwards.

In order to increase the production capability of such type of machine, **the prior art US 6 098 781, EP 1 209 103 and US 4 825 995** provided, at every cylindrical hopper turn, to be able to perform many unloadings (generally two or three) from the hopper itself to the cradles and the from the cradles to the below-placed unloading channels.

In this case, a turntable is provided rotating around an axis that is coaxial with the loading hopper rotation axis and carrying a plurality of walls that form a corresponding plurality of separating channels placed around the unloading channels.

The number of separating channels is greater than the number of unloading channels.

The turntable rotates at a number of revolutions that is different from the loading hopper and therefore different from the unloading channels.

The passage of vessels from the lower unloading channels part to the upper separating channels part must occur when said channels are coaxial.

The passage between the two channels has proven difficult when the vessels do not show a symmetry with respect to a vertical axis or in case of vessels with handles, such as for example those for detergents.

Or in case of vessels with shaped bottom or with substantially oval section varying from base to neck.

This passing difficulty restrains the vessels against the separator walls with consequent squashing of vessels and therefore production of wastes.

Object of the present invention is ensuring the passage of vessels from vertical channels to separating channels with any type of vessels, and avoiding any chance of squashing the vessels during said passage.

This and other objects are all obtained by the machine for straightening and aligning plastic vessels, object of the present invention, that is characterised by what is provided in the below-listed claims and in particular in that it provides means for closing the passage between unloading channels and separating channels when said channels are offset.

This and other features are better pointed out by the following description of two preferred, but not exclusive, embodiments shown, merely as a non-limiting example, in the enclosed tables of drawing in which:

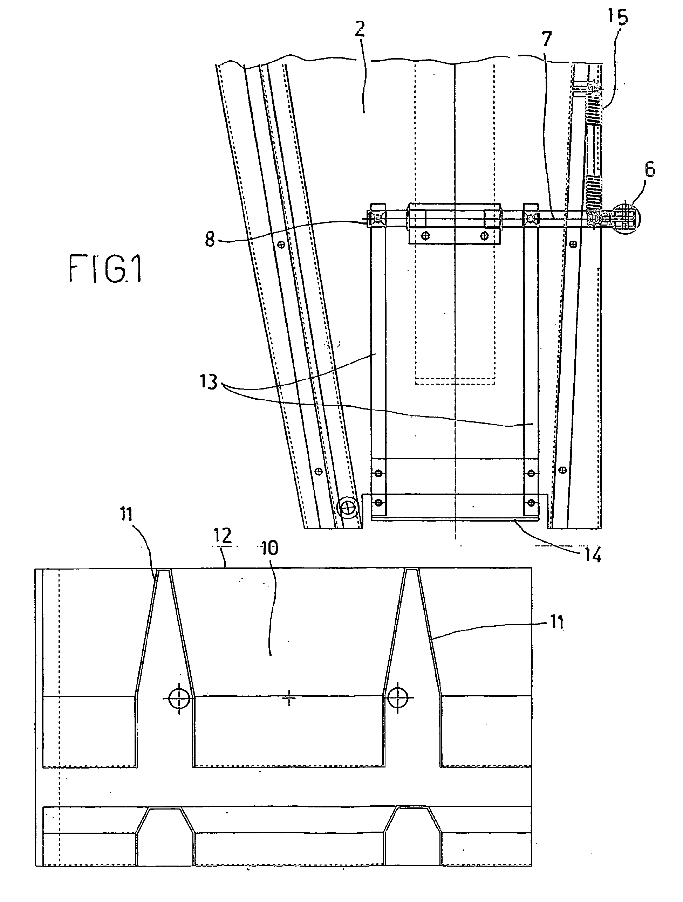

- figure 1 shows in a front view a part of the machine in which a unloading channel with below-placed aligning channel is pointed out;

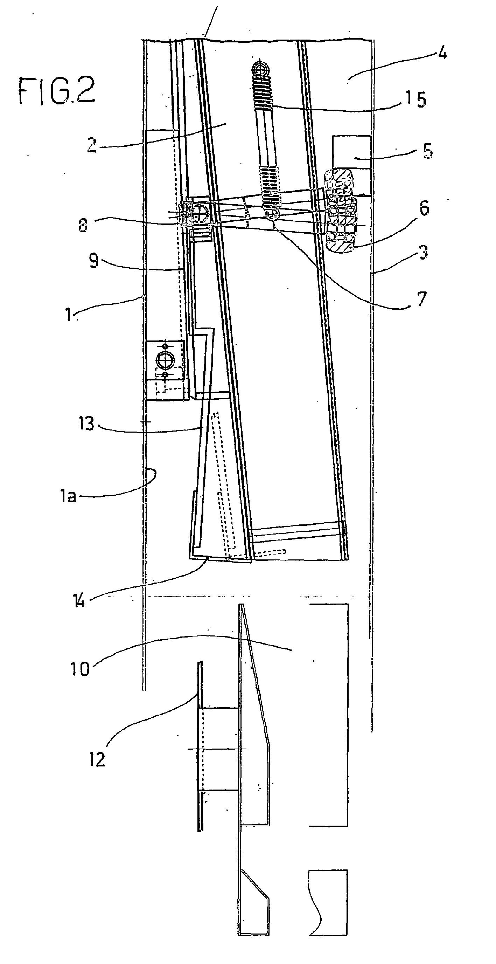

- figure 2 shows in a side view the part in figure 1;
- figure 3 shows in a front view, according to an embodiment variation, a unloading channel with below-placed aligning channel;
- figures 4 and 5 show in a side view the variation of figure 3 in two operating positions.

With reference to the figures, reference 1 designates a rotating cylindrical wall, that is the loading hopper rotated by means, not shown, and on the external surface 1a of which a plurality of unloading channels 2 are secured, placed below a plurality of cradles (not shown) adapted to receive the vessels carried by means placed inside the hopper in order to take the vessels towards the upper hopper edge.

Under the unloading channels 2 a plurality of separating channels 10 are placed, composed of a plurality of walls 11 and carried by a turntable 12 that rotates at a different speed from the rotating cylindrical hopper speed.

The machine is externally closed by a fixed concentric wall 3 that creates an annular channel 4 in which cradles and unloading channels move.

On the fixed wall 3, a cam 5 is applied on which a small wheel 6 is engaged, carried by an arm 7 with fulcrum in 8 to a bracket 9 integral with the cylindrical hopper 1.

Two rods 13 are integral with the arm 7, such rods carrying on their bottom a plane wall 14 adapted to enter into the end part of the unloading channel in order to close the passage between unloading channel and separating channel to avoid the passage of the vessel that reaches the separating channel itself.

Arm 7 and rods 13 compose a lever with fulcrum in 8.

Reference 15 designates a spring adapted to keep the wheel 6 pressed against the cam 5.

The plane wall 14 with related control means rotate integrally with the rotating hopper apart from the cam 5 that is integral with a fixed machine part.

The operation is as follows: the plane wall 14 is normally inserted in the end zone of the unloading channel and is therefore a means for closing the passage between unloading channels and separating channels when said channels are offset.

The plane wall 14 is a means for closing the passage between unloading channel and separating channel when said channels are not coaxial.

A few moments before the two channels become coaxial, the cam 5 that operates onto the wheel 6 rotates the lever with fulcrum in 8 and, consequently, the wall 14 starts moving in order to leave the passage between the two channels free: the passage will be completely freed when the two channels will be coaxial or at a time before the coaxiality depending on the vessels shape.
The cam 5 with the lever with fulcrum in 8 are means for controlling the opening or movement of closing means to leave the passage between unloading channel and separating channel free.

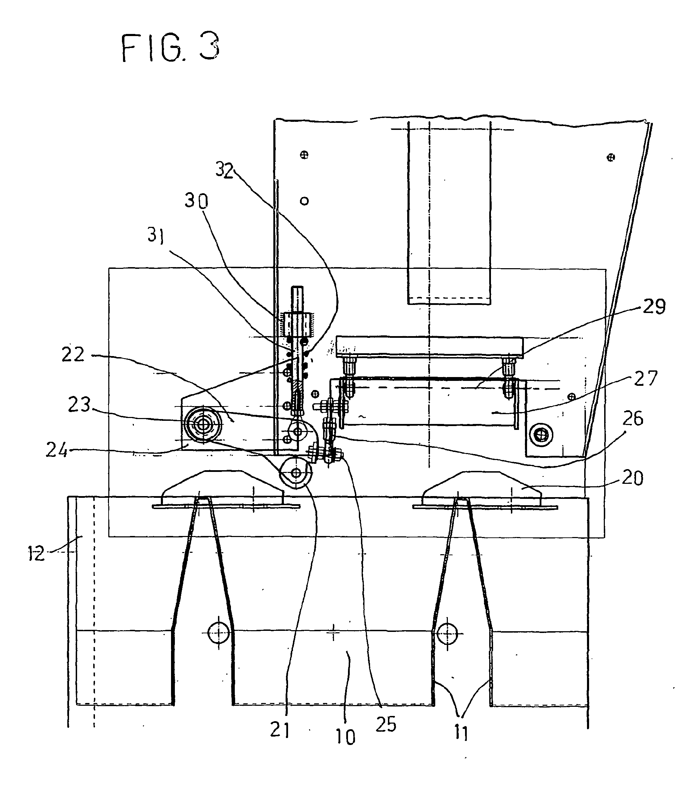

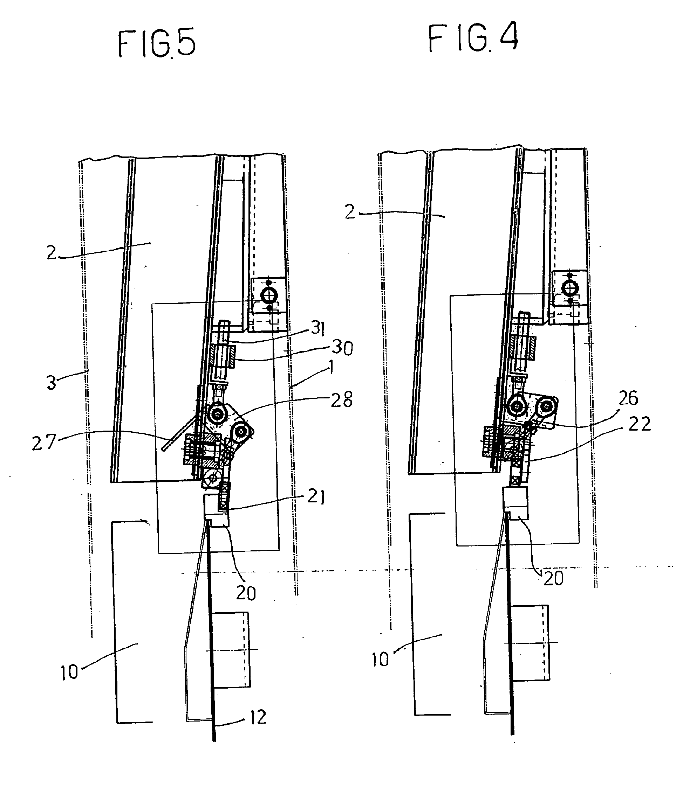

The instant in which the total opening occurs will anyway be adjustable depending on the cam position.
With reference to figures 3, 4 and 5, an embodiment variation will now be described that provides for cams 20 applied to the turntable 12 carrying the separating channels 10 formed by the plurality of walls 11. The number of cams is equal to the number of unloading channels 2.
With the cam 20 a small roller 21 is engaged, carried by an arm 22 with fulcrum on a pin 23 secured to a bracket 24 integral with the internal unloading channel wall.
At the free end of the arm 22, a pin 25 is secured on which a ball joint is inserted for a small connecting rod 26 connected, always through a ball joint, to a plane wall 27 integral with a support 28 rotating around an axis 29.
A shaft 31 is hinged at the arm 22 end, such shaft being able to slide in a slider 30 integral with the bottom unloading channel wall.
Along the shaft 31, a spring 32 is inserted that keeps the arm 22, and therefore the small roller, elastically pressed towards and onto the cam.
The plane wall 27 is adapted to penetrate into the unloading channel, as shown in figure 5, when the cam does not interfere with the small roller 21, while, when the cam interferes with the small roller, the plane wall is level with the bottom unloading channel wall, as shown in figure 4. The plane wall 27 is a means for closing the passage between unloading channel and separating channel, while the cam with all following linkages, are the rotation control means for the plane wall.
Obviously, both the means for closing the passage between channels, and the means for controlling the closing means movement to leave the passage between said channels free could be realised in a different shape from the above-described one, without anyway departing from the scope of the below-listed claims.

## Claims

1. Machine for straightening and aligning plastic vessels of the type comprising:
- a rotating cylindrical hopper for randomly loading the vessels, inside which means are provided for taking the vessels onto the upper hopper edge and for dropping them into a plurality of horizontal cradles with below-placed unloading vertical channels (2) integral with the external wall (1) of said cylindrical hopper;
- a turntable (12) carrying a plurality of walls (11) adapted to form separating channels (10) placed below the unloading channels (2), said turntable (12) rotating at a different number of revolutions with respect to the number of revolutions of the cylindrical hopper;
- **characterised in that** it comprises means (14) for closing the passage between unloading channels (2) and separating channels (10) when said channels are offset and means (5, 6, 7, 8, 9) for controlling the opening or movement of the closing means in order to leave the passage between unloading channels (2) and separating channels (10) free when said channels are coaxial or anyway at a desired time.

2. Machine according to claim 1, **characterised in that** the means for closing the passage between unloading channels and separating channels are composed of a plane wall (14) oscillating between a position in which it is placed between the end part of the unloading channel and the upper part of the separating channel and a position in which said plane wall is completely outside the vessel passing area between unloading channel and separating channel.

3. Machine according to claim 1, **characterised in that** the means for controlling the opening or movement of the closing means of the vessel passing area from unloading channel to separating channel are composed of a cam (5) integral with a fixed machine wall and of a lever with fulcrum in a point (8) supported by the rotating hopper and whose arm (7) interferes with the cam (5) and two rods (13) carry the plane wall (14).

4. Machine according to claim 1, **characterised in that** the means for controlling the opening or movement of the closing means of the vessel passing area from unloading channel to separating channel are composed of a plurality of cams (20) applied to the turntable carrying the separating channels and of a plurality of linkages (22,26) each one of which is connected to a small roller (21) that interferes with the cams (20) and a plane wall (27) adapted to penetrate at the lower end of the unloading channel.

## Patentansprüche

1. Maschine zum Gerade- und Ausrichten von Plastikbehältern der Art umfassend:
- einen drehenden zylindrischen Trichter zum wahllosen Laden der Behälter, auf dessen Innenseite Mittel ausgebildet sind, die den Behälter an den oberen Trichterrand verbringen und sie in eine Vielzahl von horizontalen Mulden mit darunter angeordneten vertikalen Abfuhrkanälen (2) fallen lassen, welche Kanäle einstückig mit der Aussenwand (1) des genannten zylindrischen Trichters ausgebildet sind;
- ein Karussell (12), das eine Vielzahl von Wänden (11) trägt, die unter den Abfuhrkanälen (2) angeordnete Trennkanäle (10) ausbildend, wobei das Karussell (12) bei einer sich von der Drehzahl des zylindrischen Trichters unterscheidenden Drehzahl dreht;
- **dadurch gekennzeichnet, dass** sie Mittel (14) zum Verschliessen des Durchgangs zwischen den Abfuhrkanälen (2) und den Trennkanälen (10) umfasst, wenn diese Kanäle axial versetzt zueinander liegen, sowie Mittel (5, 6, 7, 8, 9) zum Steuern der Öffnung bzw. der Bewegung der Verschlussmittel zum Freigeben des Durchgangs zwischen den Abfuhrkanälen (2) und den Trennkanälen (10), wenn diese Kanäle koaxial zueinander liegen oder zu jedem erwünschten Zeitpunkt.

2. Maschine nach Anspruch 1, **dadurch gekennzeichnet, dass** die Mittel zum Verschliessen des Durchgangs zwischen den Abfuhrkanälen und den Trennkanälen eine ebene Wand (14) umfassen, welche zwischen einer Stellung, in der sie zwischen dem Endbereich des Abfuhrkanals und dem oberen Teil des Trennkanals liegt, und einer Stellung, in der die genannte ebene Wand sich vollständig ausserhalb des Behälterdurchgangsbereichs zwischen dem Abfuhrkanal und dem Trennkanal befindet, schwenkt.

3. Maschine nach Anspruch 1, **dadurch gekennzeichnet, dass** die Mittel zum Steuern der Öffnung bzw. der Bewegung der Verschlussmittel des Behälterdurchgangsbereichs von dem Abfuhrkanal auf den Trennkanal einen einstückig mit einer feststehenden Maschinenwand ausgebildeteten Nocken (5) und eine bei (8) angelenkten Hebel umfassen, der von dem drehenden Trichter getragen wird und dessen Ausleger (7) an dem Nocken (5) und den beiden Stangen (13) angreift, welche die ebene Wand (14) tragen.

4. Maschine nach Anspruch 1, **dadurch gekennzeichnet, dass** die Mittel zum Steuern der Öffnung bzw. der Bewegung der Verschlussmittel des Behälterdurchgangsbereiches von dem Abfuhrkanal zu dem Trennkanal eine Vielzahl von an dem die Trennkanäle tragenden Karussell angeformten Nocken (20) umfassen, sowie jeweils mit einer kleinen, an den Nocken (20) angreifenden Walze (21) verbundene Gestänge (22, 26) und eine ebene, in einen unteren Endbereich des Abfuhrkanals eintretende Wand (27).

## Revendications

1. Machine pour redresser et aligner des récipients en matière plastique, du type comprenant:
- une trémie cylindrique rotative pour charger en vrac les récipients, à l'intérieur de laquelle sont prévus des moyens de prélever les récipients sur le bord supérieur de la trémie et pour les déposer dans une pluralité de nacelles horizontales avec des canaux verticaux de déchargement (2) situés au-dessous faisant partie intégrante de la paroi externe (1) de ladite trémie cylindrique;
- une plaque tournante (12) supportant une pluralité de parois (11) adaptées à former des canaux de séparation (10) placés au-dessous des canaux de déchargement (2), ladite plaque tournante (12) pivotant selon un nombre de révolutions différent du nombre de révolutions de la trémie cylindrique;
- **caractérisée en ce qu'**elle comprend des moyens (14) de fermeture du passage entre les canaux de déchargement (2) et les canaux de séparation (10) lorsque lesdits canaux sont décalés, et des moyens (5, 6, 7, 8, 9) de contrôle de l'ouverture ou le mouvement des moyens de fermeture de manière à laisser libre le passage entre les canaux de déchargement (2) et les canaux de séparation (10) lorsque lesdits canaux sont coaxiaux ou de toute façon en un temps voulu.

2. Machine selon la revendication 1, **caractérisée en ce que** les moyens de fermeture du passage entre les canaux de déchargement et les canaux de séparation sont composés d'une paroi plane (14) oscillant entre une position dans laquelle elle est placée entre la partie d'extrémité du canal de déchargement et la partie supérieure du canal de séparation et une position dans laquelle ladite paroi plane est complètement à l'extérieur de la zone de passage du récipient entre le canal de déchargement et le canal de séparation.

3. Machine selon la revendication 1, **caractérisée en ce que** les moyens de contrôle de l'ouverture ou du mouvement des moyens de fermeture de la zone de passage des récipients du canal de déchargement au canal de séparation sont composés d'une came (5) faisant partie intégrante d'une paroi fixe de la machine et d'un levier ayant son axe en un point (8) supporté par la trémie rotative et dont le bras (7) interfère avec la came (5) et deux tiges (13) supportent la paroi plane (14).

4. Machine selon la revendication 1, **caractérisée en ce que** les moyens de contrôle de l'ouverture ou du mouvement des moyens de fermeture de la zone de passage des récipients du canal de déchargement au canal de séparation sont composés d'une pluralité de cames (20) appliquées sur la plaque tournante supportant les canaux de séparation et d'une pluralité d'éléments de transmission (22, 26), chacun desquels étant connecté à un petit rouleau (21) qui interfère avec les cames (20) et une paroi plane (27) adaptée à pénétrer sur l'extrémité inférieure du canal de déchargement.
